# EUROPÄISCHE PATENTANMELDUNG

(11) **EP 1 295 761 A2**
(43) Veröffentlichungstag der Anmeldung: **26.03.2003**
(21) Anmeldenummer: 02015422.5
(22) Anmeldetag: 11.07.2002
(51) Int. Cl.: B60R 21/045

(54) **Kniestütze für Insassen**

(30) Priorität: 21.09.2001 DE 10146495
(71) Anmelder: Dr.Ing. h.c.F. Porsche Aktiengesellschaft, 70435 Stuttgart (DE)
(72) Erfinder: Horsch, Guido, 75382 Althengstett (DE)

(57) **Zusammenfassung**

Diese Kniestütze (18) ist innerhalb eines Fahrgastraums eines Aufbaus eines Kraftfahrzeugs im Bereich einer Schalttafel angeordnet und weist einen sich quer zur Fahrzeuglängsrichtung erstreckenden, an feststehenden seitlichen Aufbaustrukturen gehaltenen und einen mit wenigstens einem Deformationselement versehenen Querträger (12) auf.

Zur Optimierung der Kniestütze (18) umfasst das mittels einer Stützwand der Schalttafel gegenüber dem Fahrgastraum zumindest bereichsweise abgedeckte Deformationselement (13) einen ersten auf Knieaufschlagbereiche gerichteten ersten Trägerabschnitt und einen zweiten mit dem Querträger (12) verbundenen Trägerabschnitt dergestalt, dass der erste Trägerabschnitt (19) vor allem durch Biegung, der zweite Trägerabschnitt (20) belastungsabhängig durch Stauchung und/oder Biegung und gegebenenfalls der Querträger (12) belastungsabhängig durch Biegung und/oder Verdrehung Energie absorbieren.

## Beschreibung

Die Erfindung bezieht sich auf eine Kniestütze für Insassen von Kraftfahrzeugen, insbesondere Personenwagen nach dem Oberbegriff des Patentanspruchs 1.

Es ist ein Kniefänger bekannt, DE 40 03 952 A1, der mit einem im Bereich unter dem Armaturenbrett angeordneten und sich in Fahrzeugquerrichtung erstreckenden Knieaufprallelement mit Deformationsmitteln zur Energieabsorption versehen ist. Das Knieaufprallelement ist als biegesteifer Querträger ausgeführt, der an einem Endbereich über ein Deformationselement an der Karosserie abgestützt ist.

Aus der US 4,709,943 geht eine Kniestütze hervor, die in ein Kraftfahrzeug eingebaut ist, von einer Stützwand einer Schalttafel verkleidet wird und einen Stoßaufnahmeträger aufweist. Der Stoßaufnahmeträger ist über Halteelemente an einen Querträger angeschlossen, der mit seitlichen Rahmenstrukturen verbunden ist. Zwischen dem Stoßaufnahmeträger und den Halteelementen sind Stoßenergie absorbierende Einrichtungen vorgesehen.

In der US 5,273,314 wird eine vergleichbare Kniestütze mit einem Deformationselement behandelt, das sich in Fahrzeuglängsrichtung gesehen von der Stützwand der Schalttafel bis zum Querträger erstreckt. Das Deformationselement ist nach Art eines Trägers gestaltet und weist beabstandete Tragwände auf, die durch Stege miteinander verbunden sind. Die Dicke der Tragwände und der Stege ist unterschiedlich d.h. sie nimmt von der Stützwand aus bis zum Querträger hin zu.

Aufgabe der Erfindung ist es, eine Kniestütze so zu verbessern, dass sie für Personen unterschiedlicher Körpergröße geeignet ist und hohe Verformarbeit bei einer definierten Kollision leistet.

Erfindungsgemäß wird diese Aufgabe durch die Merkmale des Patentanspruchs 1 gelöst.

Weitere, die Erfindung ausgestaltende Merkmale sind in den Unteransprüchen enthalten.

Die mit der Erfindung hauptsächlich erzielten Vorteile sind darin zu sehen, dass der erste Trägerabschnitt und der zweite Trägerabschnitt des Deformationselements zusammen mit der Stützwand sowie die Verbindung des Deformationselements mit dem Querträger zur gezielten Energieaufnahme geeignet sind und bei einer definierten Kollision des Kraftfahrzeugs Knie der Insassen durch die so gestaltete Kniestütze weitreichend geschützt werden. Dabei sind die Stützwand und der erste Trägerabschnitt so angeordnet und ausgebildet, dass sie auch Stosskräfte von Insassen unterschiedlicher Körpergröße funktionsgerecht einleiten und übertragen. Das Deformationselement ist leicht herstellbar und mit dem Querträger verbindbar. Schließlich weist die Kniestütze dann eine herausragende Funktion auf, wenn am Querträger im Bereich von Knien der Insassen jeweils zwei Deformationselemente vorgesehen sind.

In der Zeichnung wird ein Ausführungsbeispiel der Erfindung gezeigt, das nachstehend näher beschrieben ist.

Es zeigen
- Fig. 1: ein Längsschnitt durch ein Kraftfahrzeug im Bereich einer Schalttafel mit der erfindungsgemäßen Kniestütze,
- Fig. 2: eine Einzelheit X der Fig.1 in kleinerem Maßstab,
- Fig. 3: eine Schrägansicht von der linken Fahrzeugseite aus auf die Kniestütze nach der Erfindung,
- Fig. 4: eine Ansicht eines Deformationselements der Kniestütze mit einem ersten Knieaufschlagbereich,
- Fig. 5: eine Ansicht des Deformationselements der Fig. 4 in durch einen Knieaufschlag verformtem Zustand,
- Fig. 6: eine Ansicht des Deformationselements der Kniestütze mit einem zweiten Knieaufschlagbereich,
- Fig. 7: eine Ansicht des Deformationselements der Fig. 6 in durch einen Knieaufschlag deformiertem Zustand.

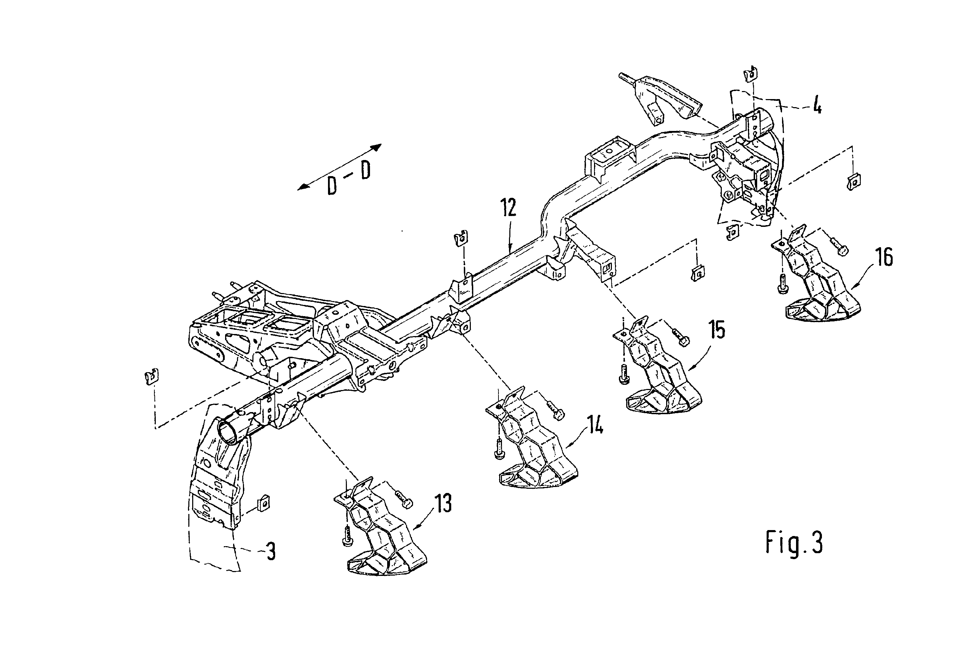

Von einem Kraftfahrzeug z.B. der Personenkraftwagen-Gattung ist lediglich eine Schalttafel 1, dargestellt, die sich quer zur Fahrzeuglängsrichtung A-A in einem Fahrgastraum 2 zwischen festen seitlichen Aufbaustrukturen 3,4 - Fig. 3 - bspw. A-Säulen erstreckt. Die Schalttafel 1 umfasst einen Winkelrahmen 5, der auf der dem Fahrgastraum 2 zugewandten Seite 6 mit einer Polsterung 7 versehen ist. Im Querschnitt gesehen weist der Winkelrahmen 5 einen unteren im Winkel α von 27° bis 32° zu einer Horizontalen 8 verlaufenden sowie entgegen der Fahrtrichtung B ansteigenden als Stützwand 9 ausgebildeten Schenkel 10 und einem oberen in Fahrtrichtung B nach oben gerichteten Schenkel 11 auf; die Schenkel 10 und 11 schließen einen Winkel β von etwa 97° ein. Bei C d.h. am Übergang zwischen Schenkel 10 und Schenkel 11 tangiert ein erster Knieaufschlagbereich Kab I eines 95 % Manns die Polsterung 7 bzw. die Stützwand 9; unterhalb davon sind noch die Knieaufschlagbereiche Kab II und Kab III eines 50 % Manns bzw. einer 5 % Frau. Die Knieaufschlagbereiche Kab I, Kab II und Kab III verkörpern Insassen mit unterschiedlichen Körpergrößen.

In Fahrtrichtung B gesehen vor der Schalttafel 1 ist ein Querträger 12 angeordnet, der an den seitlichen Aufbaustrukturen 3,4 gehalten ist. Der Querträger 12 ist mit Deformationselementen 13,14,15,16 versehen, die zusammen mit Stützwand 17 der Schalttafel 1 im Wesentlichen eine Kniestütze 18 bilden. Bei einer unfallbedingten Havarie des Kraftfahrzeugs wird die Kniestütze 18 den Knieaufprall der Insassen absorbieren, dergestalt, dass die von den Knieaufschlagbereichen Kab I, Kab II und Kab III ausgehenden Kniekräfte innerhalb gegebener Werte bleiben. Im Ausführungsbeispiel sind fahrerseitig und beifahrerseitig je zwei Deformationselemente 13,14 bzw. 15,16 angeordnet - Fig. 3 -, und zwar bspw.- in Fahrzeugquerrichtung D-D gesehen - jeweils seitlich außerhalb der Knie des Fahrers und des Beifahrers. Andere Arten der Anordnung der Deformationselemente sind jedoch ebenfalls denkbar.

Jedes Deformationselement z.B. 13 weist einen ersten entlang der Stützwand 9 der Schalttafel 1 verlaufenden Trägerabschnitt 19 und einen zusätzlichen Trägerabschnitt 20 auf, die beide Gebilde zur definierten Deformation darstellen. Der erste Trägerabschnitt 19 ist auf die Knieaufschlagbereiche Kab I, Kab II und Kab III hin ausgerichtet und der zweite Trägerabschnitt 20 ist mit dem Querträger 12 verbunden, wobei die Trägerabschnitte 19 und 20 und der Querträger 12 so gestaltet und zueinander angeordnet sind, dass der erste Trägerabschnitt 19 durch Biegung, der zweite Trägerabschnitt 20 durch Stauchung und der Querträger 12 durch Biegung, gegebenenfalls auch Verdrehung Energie absorbieren. Dabei sind die Energie absorbierende Eigenschaften besitzende Stützwand 9 und der erste Trägerabschnitt 19 zur Einleitung und Aufnahme von Stosskräften von Insassen unterschiedlicher Körpergröße ausgebildet, was durch die Knieaufschlagbereiche Kab I, Kab II und Kab III veranschaulicht ist. Günstige konstruktive Verhältnisse werden dadurch erzielt, dass die Stützwand 9 mit definiertem konstantem Abstand As zum Trägerabschnitt 19 verläuft.

Der erste Trägerabschnitt 19 und der zweite Trägerabschnitt 20 werden durch Hohlträger 21,22 gebildet, die von ersten Wänden 23,24 bzw. zweiten Wänden 25,26 begrenzt werden. Hierbei sind die Trägerabschnitte 19,20 so gestaltet und zusammengesetzt, dass sich ein sichelförmiges Gebilde 27 ergibt, das bei 28 an dem Querträger 12 hängend angebracht ist.

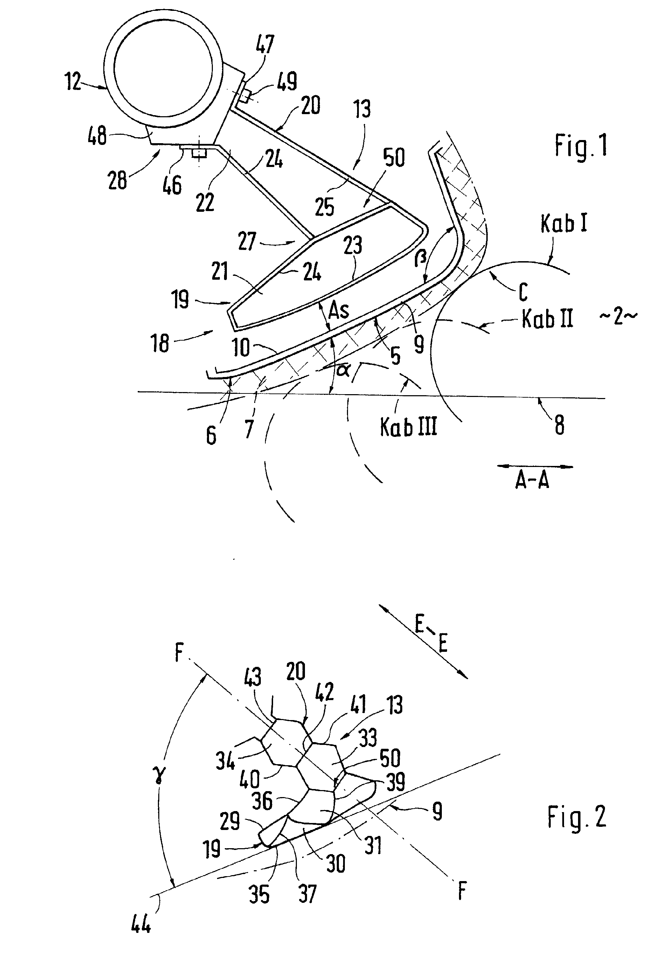

In Fig. 2 wird gezeigt, dass der erste Trägerabschnitt 19 und der zweite Trägerabschnitt 20 Einzelhohlträger 29,30,31,32 bzw. 33,34 umfasst. Die Einzelhohlträger 29,30,31,32 werden durch eine erste Trägerwand 35, eine zweite Trägerwand 36 und im Winkel zueinander verlaufende Stege 37,38,39 gebildet, die zwischen den beabstandeten Trägerwänden 35,36 eine Art Diagonalverrippung bilden. Der zweite Trägerabschnitt 20 ist von der zweiten Trägerwand aus weggeführt und weist in einer Längsrichtung E-E des besagten Trägerabschnitts gesehen die hintereinander angeordneten Einzelhohlträger 33,34 auf. Hierzu ist eine dritte Trägerwand 40 und eine vierte Trägerwand 41 vorgesehen, die mittels Querstege 42,43 abgestützt sind. Die Trägerwände 40,41 und Querstege 42,43 ebenso die zweite Trägerwand 36 im Bereich des zweiten Trägerabschnitts 20 bilden eine sechseckige Wabenstruktur. Außerdem erstreckt sich eine Mittellängsebene F-F des zweiten Trägerabschnitts 20 im stumpfen Winkel γ von 80° zu einer Geraden 44, entlang der die erste Trägerwand 35 des ersten Trägerabschnitts 19 verläuft.

Der zweite Trägerabschnitt 20 ist auf der dem Querträger 12 zugekehrten Seite bei 28 - Fig.1 - mit im Winkel zueinander angeordneten Anschlussflanschen 46,47 versehen, die an einer Konsole 48 des Querträgers 12 mittels Schrauben 49 in Lage gehalten werden. Dabei sind der erste Trägerabschnitt 19 und der zweite Trägerabschnitt 20 in der Weise zu dem einen kreisförmigen Querschnitt aufweisenden Querträger 12 angeordnet, dass er durch Torsion zu Deformationsoptimierung der Kniestütze 18 beiträgt.

Der erste Trägerabschnitt 19 und der zweite Trägerabschnitt 20 können getrennt voneinander hergestellt und bei 50 zum Deformationselement 13 zusammengesetzt werden. Möglich ist aber auch die Trägerabschnitte 19,20 als Strangpressprofil - Leichtmetall, Stahl, Kunststoff - aus einem Stück zu fertigen.

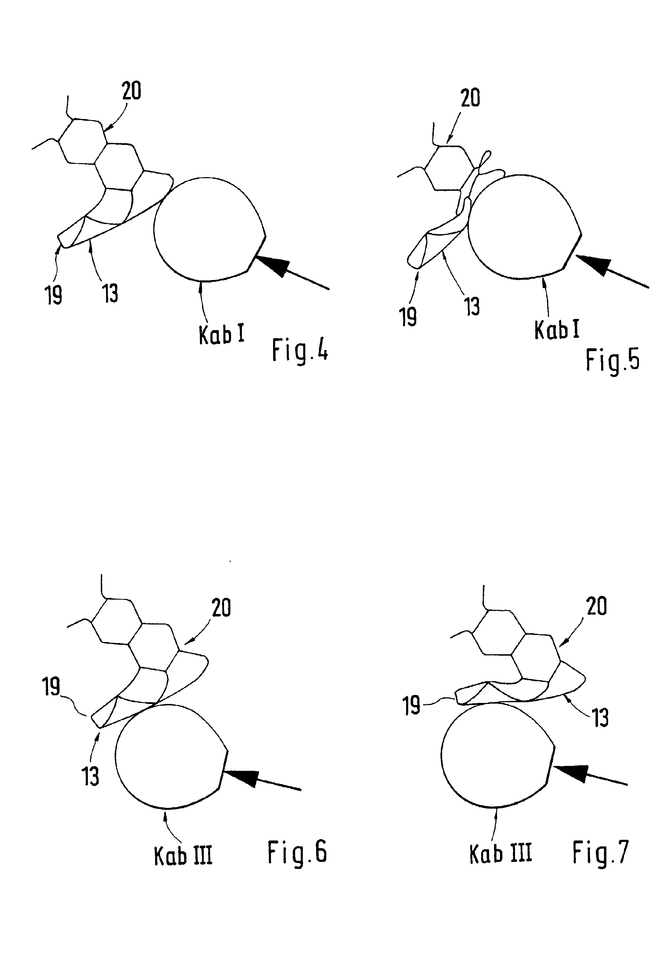

In den Figuren 4 und 5 wird die Wirkung des Deformationselements 13 ohne die Stützwand 17 gezeigt. Danach belasten Knie eines 50 % Mannes im Kab II das Deformationselement 13, das durch Biegung des Trägerabschnitts 19 und Stauchung des Trägerabschnitts 20 Stossenergie zum Schutz der Knie des betroffenen Insassen absorbiert. Die Fig. 6 und 7 geben wieder, wie Knie einer 5 % Frau am Deformationselement 13 auftreffen, wobei in diesem Fall der Trägerabschnitt 18 ausgeprägt auf Biegung beansprucht wird. Schließlich wird aus diesen Figuren ersichtlich, dass das Deformationselement 13 komplexen Belastungen ausgesetzt sein kann, dergestalt, dass der erste Trägerabschnitt 19 vor allem durch Biegung, der zweite Trägerabschnitt 20 belastungsabhängig durch Stauchung und/oder Biegung und gegebenenfalls der Querträger 12 durch Biegung und Verdrehung Energie absorbieren.

## Patentansprüche

1. Kniestütze für Insassen von Kraftfahrzeugen, die innerhalb eines Fahrgastraums eines Aufbaus des Kraftfahrzeugs im Bereich einer Schalttafel angeordnet ist und einen sich quer zur Fahrzeuglängsrichtung erstreckenden, an feststehenden seitlichen Aufbaustrukturen gehaltenen und einen mit wenigstens einem Deformationselement versehenen Querträger aufweist, **dadurch gekennzeichnet, dass** das mittels einer Stützwand (17) der Schalttafel (1) gegenüber dem Fahrgastraum (2) zumindest bereichsweise abgedeckte Deformationselement (13,14,15,16) einen ersten auf Knieaufschlagbereiche (Kab I, Kab II, Kab III) der Insassen gerichteten Trägerabschnitt (19) und einen zweiten mit dem Querträger (12) verbundenen Trägerabschnitt (20) umfasst, dergestalt, dass der erste Trägerabschnitt (19) vor allem durch Biegung, der zweite Trägerabschnitt (20) belastungsabhängig durch Stauchung und/oder Biegung und gegebenenfalls der Querträger (12) belastungsabhängig durch Biegung und durch Verdrehung Energie absorbieren.

2. Kniestütze nach Anspruch 1, **dadurch gekennzeichnet, dass** die Stützwand (17) der Schalttafel (1) und der erste Trägerabschnitt (19) zur Einleitung von Stoßkräften von Insassen unterschiedlicher Körpergröße ausgebildet ist.

3. Kniestütze nach Anspruch 2, **dadurch gekennzeichnet, dass** die Stützwand (17) Energie absorbierend ausgebildet ist.

4. Kniestütze nach einem oder mehreren der vorangehenden Ansprüche, **dadurch gekennzeichnet, dass** die Stützwand (17) mit definiertem Abstand (As) zum ersten Trägerabschnitt (19) verläuft.

5. Kniestütze nach Anspruch I, **dadurch gekennzeichnet, dass** der erste Trägerabschnitt (19) und der zweite Trägerabschnitt (20) durch von ersten Wänden (23) und von zweiten Wänden(24) begrenzte Hohlträger (21,22) gebildet werden.

6. Kniestütze nach Anspruch 5, **dadurch gekennzeichnet, dass** der erste Trägerabschnitt (19) und der zweite Trägerabschnitt (20) in der Weise zusammengesetzt sind, dass sich ein sichelförmiges Gebilde ergibt.

7. Kniestütze nach einem oder mehreren der vorangehenden Ansprüche **dadurch gekennzeichnet, dass** die Trägerabschnitte (19,20) mehrere Einzelhohlträger (29,30,31,32 und 33,34) umfassen.

8. Kniestütze nach einem oder mehreren der vorangehenden Ansprüche, **dadurch gekennzeichnet, dass** die Einzelhohlträger (29,20,31,32) des ersten Trägerabschnitts (19,20) durch Stege (37,38,39) zwischen Trägerwänden (35,36) und die Einzelhohlträger (33,34) des zweiten Trägerabschnitts (20) durch Querstege (42,42) zwischen Trägerwänden (40,41) gebildet werden.

9. Kniestütze nach einem oder mehreren der vorangehenden Ansprüche, **dadurch gekennzeichnet, dass** die Trägerabschnitte (19,20) aus einem Stück bspw. als Strangpressprofil hergestellt sind, wobei als Werkstoff Leichtmetall, Stahl oder dgl. eingesetzt. wird.

10. Kniestütze nach Anspruch I, **dadurch gekennzeichnet, dass** in Fahrzeugquerrichtung gesehen am Querträger (12) im Bereich der Knie der Insassen jeweils zwei Deformationselemente (13,14 oder 15,16) vorgesehen sind.

11. Kniestütze nach Anspruch 10, **dadurch gekennzeichnet, dass** die Deformationselemente (13,14 oder 15,16) jeweils außerhalb der konstruktiven Lage der Knie der Insassen vorgesehen sind.
